# EUROPEAN PATENT SPECIFICATION

(11) **EP 3 217 605 B1**
(45) Date of publication and mention of the grant of the patent: **07.11.2018**
(21) Application number: 16382104.4
(22) Date of filing: 08.03.2016
(51) Int. Cl.: H04L 12/58

(54) **METHOD AND SYSTEM FOR DETERMINING RELEVANCE OF MESSAGES IN GROUP MESSAGING SERVICES**
VERFAHREN UND SYSTEM ZUR BESTIMMUNG DER RELEVANZ VON NACHRICHTEN IN GRUPPENNACHRICHTENDIENSTEN
PROCÉDÉ ET SYSTÈME POUR DÉTERMINER LA PERTINENCE DE MESSAGES DANS DES SERVICES DE MESSAGERIE DE GROUPE

(43) Date of publication of application: 13.09.2017
(73) Proprietor: Telefonica Digital España, S.L.U., 28013 Madrid (ES)
(72) Inventor: NEYSTADT, John (Eugene), 28013 Madrid (ES); OLIVER, Nuria, 28013 Madrid (ES); GENUD, Yinon, 28013 Madrid (ES)
(74) Representative: Herrero & Asociados, S.L.

(56) References cited:
- US-A1- 2006 036 689
- US-A1- 2009 182 823
- US-A1- 2009 313 346

## Description

### Field of the invention

The present invention has its application within the telecommunication sector, especially, deals with the field of providing group messaging services (e.g., WhatsApp, Facebook Messenger, Telegram, Line, Wechat,...). More particularly, the present invention refers to a method and system for determining the relevance of messages exchanged among the users of a conversation group.

### Background of the invention

Group messaging services, such as WhatsApp, have gained a lot of popularity and hence reached wide adoption. Large groups (e.g. 15 people or more) generate a large number of messages and therefore users struggle to process and filter this huge amount of information, potentially missing relevant information due to this information overload.

Typical group/conversation messaging (e.g. WhatsApp or SMS) is done via Store & Forward relay, where Store & Forward relay only queues undelivered messages, while each end communication device (user terminal) stores locally messages after receiving it from Store & Forward relay.

Store & Forward messages are normally delivered to the end user device and no further feedback is provided with regards to the interest from other recipients of the messages. This feature of Store & Forward communications differs from web-based group conversations (like the ones in social networks, e.g. Facebook), where messages are retrieved from the server in the moment the recipient wants to read them and information about the interest from other recipients (i.e., information about "likes" from the others) can be provided by the server at that very moment together with the messages.

For example, the algorithm EdgeRank, used by Facebook to retrieve information about users' interests on articles (posts) in order to determine which articles should be displayed in a user's home page, takes into account three parameters for ranking of posts:
- User Affinity, which looks at the relationship and proximity of the user and the content (post/status update);
- Content Weight, related to how the content is weighted (number of likes, comments, etc.);
- Time-Based Decay Parameter, which labels a post as new or old, so that newer posts can hold a higher place than older posts.

Another example of web-based group conversation services is Quora, which is a question-and-answer website where questions are asked, answered, edited and organized by its community of user. Quora service orders the replies to questions by number of votes from the users.

However, such functionality of message ranking or rating cannot be provided with common group messaging services available today, such as SMS or WhatsApp, as they are peer-to-peer in their nature, and do not track previously sent messages, once the messages have been delivered to the user's device.

Therefore, there is a need in the state of the art for enhancing the way in which the messages exchanged within group conversations based on store & forward messages (e.g. WhatsApp) are displayed (e.g. by highlighting, or building summaries), taking into account other user's feedback on the messages.

Document US 2006/0036689 A1 discloses a personal messaging proxy as a component in a messaging or instant messaging system. The proxy provides information processing and routing services not found in conventional messaging or instant messaging and presence systems.

### Summary of the invention

The present invention solves the aforementioned problem and overcomes previously explained state-of-art work limitations by providing the users of group messaging services based on store & forward messages with means for determining the relevance of the messages by explicitly acknowledgement ("like") the most interesting messages in a group conversation of the messaging service.

The present invention allows the users of group messaging services, such as SMS (Short Message Service) or WhatsApp messenger, to see the number of "likes" from other users and top messages (e.g., a great joke or picture, or an urgent message such as "I need your answer now") highlighted for them, while other members of the group are looking at the posts received by the group.

In the context of the invention, the following concepts are used:
Relevance of messages: It is a ranking parameter associated with a message and determined by the number of "likes", the more relevant messages being the ones with a higher number of "likes" associated and the ones to be displayed on top of the ranking list of messages, ordered from the most relevant message to the less one in the end of the list. The top of the ranking list of messages is displayed to the members of the group, maybe highlighted or in a summary.
"Like" feature: It is a like or recommending option provided by the communication service (software) which can be used by the members of the group messaging service to express that they like, enjoy or support certain message. The "Like" feature can be implemented as a like button or a more complex voting mechanism (e.g., grant of 0-5 stars, etc.)

According to a first aspect of the present invention, a method for determining relevance of messages in group messaging services is disclosed according to the features of independent claim 1.

A second aspect of the present invention refers to a system comprising the features of independent claim 13.

The method in accordance with the above described aspects of the invention has a number of advantages with respect to prior art, which can be summarized as follows:
- Members of a Group are able to easily spot the most relevant messages in a conversation, according to different factors comprising the indications of relevance given by other members of the group. The present invention makes this feature, which was already available in web-based systems such as Social Networks, now available for Store & Forward messaging systems.
- User can optimize the consumption of information exchanged in a group Store & Forward messaging conversation, as the most relevant messages are highlithed or the less relevant filtered out.

These and other advantages will be apparent in the light of the detailed description of the invention.

### Description of the drawings

For the purpose of aiding the understanding of the characteristics of the invention, according to a preferred practical embodiment thereof and in order to complement this description, the following figures are attached as an integral part thereof, having an illustrative and non-limiting character:
Figure 1 shows a schematic diagram of a system for determining relevance of messages in group messaging services, according to a possible embodiment of the invention.
Figure 2 shows a flow diagram of a method for determining relevance of messages in the system of the previous Figure 1, according to a possible embodiment of the invention.

### Preferred embodiment of the invention

The matters defined in this detailed description are provided to assist in a comprehensive understanding of the invention. Of course, the embodiments of the invention described here can be implemented in a variety of architectural platforms, operating and server systems, devices, systems, or applications. Any particular architectural layout or implementation presented herein is provided for purposes of illustration and comprehension only and is not intended to limit aspects of the invention.

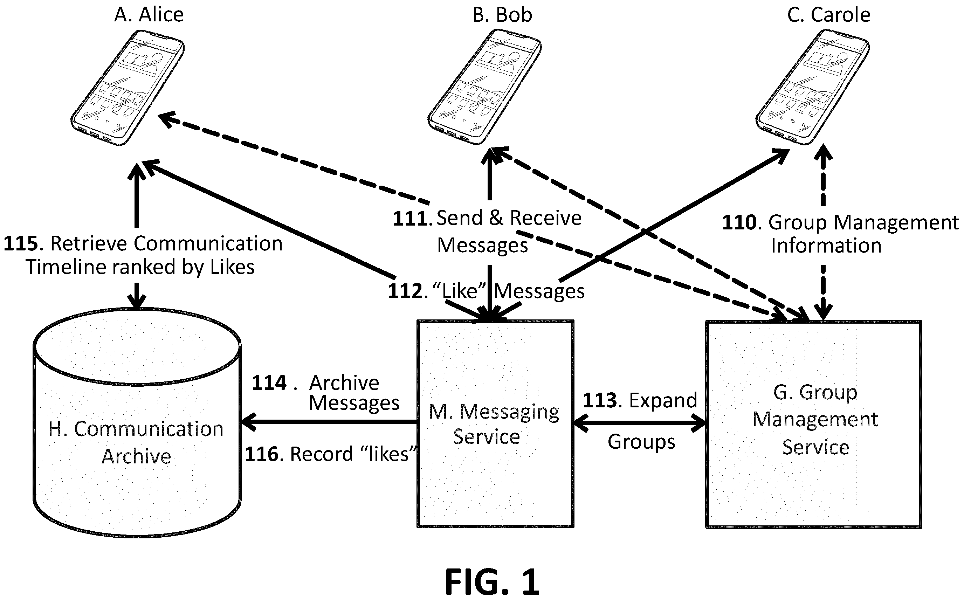

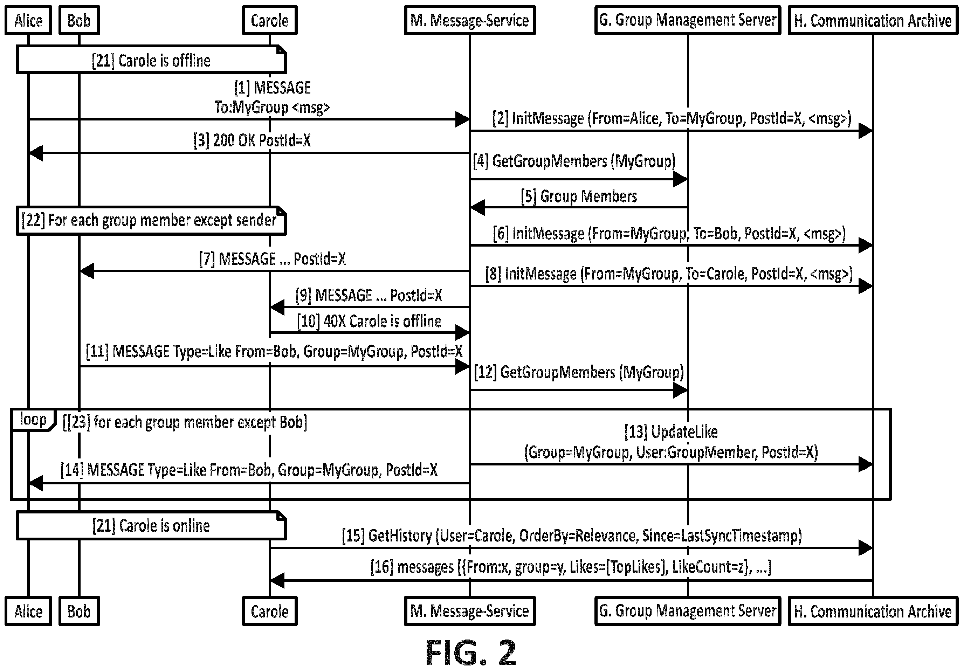

It is within this context, that various embodiments of the invention are now presented with reference to the FIGs. 1 and 2.

Figure 1 presents a system for determining relevance of messages in a group messaging service. The system comprises a messaging server (M), configured for a store & forward relay, which distributes (111), sends and receives, the messages to those users or members of the group which are online and stores a copy of the message to be delivered to those members which are not online whenever they become online. In Figure 1, a plurality of users (A, B, C) is shown belonging to a group of the messaging service. A group management server (G) keeps information of which users belong to which groups/conversations, information provided previously (110) to the group management server (G).

In the example of Figure 1, users (A, B, C) are called respectively as: user Alice (A), user Bob (B) and user Carole (C). Each of these users (A, B, C), which belong to the same group, can have one or more user device. In order to facilitate the description of a preferred embodiment, it is assumed that a user has just one user device.

The system of Figure 1 enables a "like" mechanism to rate messages received from the Store & Forward messaging server (M) and works as follows:
- Users (A, B, C) which are members of a group send to the Messaging Server (M) messages destined to the group. Strictly speaking, the messages are sent by the user devices.
- The Messaging Server (M) receives the messages from the users (A, B, C) and delivers (111) them in store & forward basis to the group of users, including the users (A, B, C). In addition, the Messaging Server (M) stores a copy (114) of all messages sent by a member of a group in a cloud Communication Archive (H), or alternatively in the sending user device used by said member. It is an option of implementation storing either a single copy of a sent message or multiple copies of it -storing a copy of the same sent message for each user of the group-.
- Every time a user (A,B,C) "likes" a message on his/her user device, e.g., a mobile terminal, the user device sends (112) an indication of relevance of message, i.e. the "like, to the Messaging Server (M), which in turn records (116) the indication in the Communication Archive (H), or alternatively in the user device from which the user (A,B,C) indicated a "like" to the message.
- The Messaging Server (M) distributes these "like" or relevance indications (112) via store & forward relay to all other group members. In order to perform distribution, group membership needs to be "expanded" by querying (113) the Group Management server (G), which returns the information of which users belong to which groups previously provided (110).
- If the user device is offline at the moment when "likes" indications (112) are to be delivered, the user (A,B,C) can query to retrieve (115) missed communications and "likes" messages from the cloud Communication Archive (H). In order to avoid downloading in the user device the entire communication timeline needed to be available to perform ranking, the user device can request the cloud Communication Archive (H) to perform relevance ranking on its behalf, according to the same ranking logic above-mentioned, e.g., EdgeRank, to send messages to the user device having the ranking result already assigned to the messages.
- Upon receiving by other group members the updates of relevance indications (112) assigned to a message, in real-time or after establishing connectivity to retrieve (115) communication timeline ranked by these relevance indications (112), the user device displays, e.g., in a summary or highlighting, messages with the highest number of "likes" to the user, using a ranking logic, such as Facebook EdgeRank algorithm. Another option is to enable the user device to filter and display filtered/digest view, with only top "liked" messages.

Another possible embodiment is to extend this ranking logic to factor user's "favourite" contacts in his/her mobile device and provide these favourite contacts to the Communication Archive (H) in advance. That is, the list of user's favorite contacts can be stored in the Communication Archive (H) and provided previously (110) to the Group Management server (G), to extend ranking logic to factor additional factors for relevance ranking. Thus, for each user, the relevance of individual messages can be defined according to the weighted sum of the number of 'likes' received by each message, whether message is from one of the favourite contacts of the user, and reverse proportion to age of the message (e.g. 1/[now- send time]), where the specific weight for each of the three parameters can be configurable or learned from user data. The Communication Archive (H) can then boost the rank of communications from favourite contacts by giving them more weight, over messages from non favourites. The specific weight for each of the three parameters that define the relevance of individual message, number of likes on the message, favourite contacts and message sending time can be configurable. This list of favourites could also be automatically inferred by the system based on the frequency and intensity of the user's interactions with each contact. The way of determining the list of favourite contacts is out of the scope of this invention, but it can be implemented using prior art mechanisms as: receiving update data from an external source and selecting a user for updating the address book database stored within the user's device, the update data obtained by retrieving by an analyzer a list of communication detail records (CDRs) and processing them to generate a suggested list of contacts or update data by identifying the relationship between at least two users maintaining a telecommunication interaction .

Another possible embodiment is using one of the known methods for thread identification in instant messaging, text analysis, timing, etc., so that messages in the same threads can be grouped by communication timeline, and the relevance of an entire thread can be determined by the number of likes flagged on one of thread messages, or cumulative number of "liked" on all of them, including information about the number of likes of the messages in the thread, by. e.g. taking into account the maximum number of likes, the average number of likes, etc... The messages can be then grouped by threads starting with the message that started the thread, and replies following. The relevance of an individual thread can be determined according to the weighted sum of any of the following parameters: total number of likes to all messages inside the thread, number of favourite contacts participating in the thread, topic relevance of the thread with respect to the interests of the user and sending time of last reply inside the thread, where specific weight for each of the parameters, can be configurable or learned from user's feedback on past behavior.

Threads can be then highlighted visually in the same manner as messages, or presented in a digest summary, ordering them according to weighted amount of "likes". In order to determine the thread relevance, natural language techniques can be used to the content of the thread to automatically detect the main topics discussed in the thread by means of, e.g., LDA (Latent Dirichlet Allocation) or PLSA (Probabilistic Latent Semantic Analysis). Moreover, a user model can be built by applying the same techniques to all the previous messages of a specific user in order to determine the main topics of interest. Then, the distance between the user's topics of interests and the topic of the thread can be applied to determine the relevance of a particular thread for a particular user and the different threads can be ranked by relevance of their topics. Furthermore, mixed initiative techniques can be used to enable the user to provide feedback to the system in terms of how relevant or non-relevant a particular thread is, such that the system can automatically learn from the user's feedback the best distributions of weights to provide to each thread.

Figure 2 illustrates a flow diagram of messages in a conversation named 'MyGroup' which can be set up in a typical group messaging service, such as WhatsApp or Facebook Messaging, with users (A, B, C) shown in Figure 1 and named as Alice, Bob and Carole. The users can be sometimes online, e.g. Alice & Bob, and sometimes offline (21), e.g. Carole. When Alice sends a message to the group/conversation "MyGroup", it is received (1) by the Messaging Server (M), which then stores (2) a copy of this message in Communication Archive (H). The Messaging Server (M) then sends (3) a first identifier of the received message, a Post-Id, assigned to the sending user in the Communication Archive (H), i.e., in this example, assigned back to Alice. The Messaging Server (M) then requests (4) the list of members in the group "MyGroup" and the Group Management server (G) provides it back (5). For each group member except sender (22), Bob and Carole, the Messaging Server (M) saves (6, 8) a corresponding copy of the new message in the Communication Archive (H), and attempts to deliver (7, 9) it respectively to user-devices (B, C), Bob and Carole, the identifier Post-Id included in the sent message. For offline user device (C), Carole, the Messaging Server (M) receives an indication of presence status (10) that Carole is offline. Bob then can indicate that he "likes" the message, which is signalled (11) to the Messaging Server (M), indicating the respective identifiers of the message and the group/conversation, e.g. Post-ID = X and Group-ID = MyGroup, associated with the "liked" post. Messaging Server (M) then retrieves (12) the list of group members in MyGroup and for each of them, except for Bob (23), asks the Communication Archive (H) to record (13) a "like" from Bob for message with that Post-ID and Group-ID identifiers. Communication Archive (H) can either keep counter on number of likes received, or a list of individual likes, including names of users to report the "like". Messaging Server (M) finally delivers (14) the "like" to online users (Alice), as another specially formatted message, with a Type of message = Like, including the message identification in the group i.e. Post-ID and Group-ID identifiers, of the originally "liked" message. Alice's user device (A) can then present the messages according to a highlighting schema. The user device can highlight messages visually, for example by using font weight font size or color gradient proportional to number of likes. Furthermore, Alice's user device (A) can present digest of messages, showing only a number Y of top messages with the largest number of likes. In addition Alice user device (A) boosts likes weight by strength of the relationship between Alice and the rest of the people in the group, the weight being inferred from past communication logs. When Carole's device connects and returns to be online (24), Carole's user device (C) is enabled to request to receive (15) from Communication Archive (H) the list of messages that Carole missed. Communication Archive (H) then performs message ranking, according to same logic as the user device does, but on the server side. Finally, the Communication Archive (H) returns to online Carole's user device (C) the list of messages missed by Carole while she was offline, delivering (16) the list with the stored information on number of likes received for a Post-ID and Group-ID and the list of top likes. This information allows the user device, in case it has been received a large number of messages while being offline, to start seeing top liked messages the first, without downloading all messages, or while continuing to download them from the server in the background.

The proposed embodiments can be implemented as a collection of software elements, hardware elements, firmware elements, or any suitable combination of them.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for determining relevance of messages in group messaging services, the method comprising:
- receiving (1) by a Messaging Server (M) a message from a sender user (A) which belongs to a group of messaging service;
- storing (2) a copy of the message in a Communication Archive (H) communicated with the Messaging Server (M);
- requesting (4) by the Messaging Server (M) from a group management server (G) a list of users (A, B, C) which belong to the group of the sender user (A), each user of the list (A, B, C) being associated with a presence status selected from online and offline;
- for each user of the list (B, C) except the sender user (A), the Messaging Server (M) requesting to deliver (7, 9) the copy of the message; the method being **characterized by** further comprising:
- receiving by the Messaging Server (M), from at least one of the users of the list (A, B, C), a signalling (11) with an indication of relevance of the message;
- delivering, by the Messaging Server (M) to every user (A, B, C) of the group whose presence status is online, the indications of relevance signalled for the message and information to identify the message, the information to identify the message comprising an identifier of the group and a first identifier of the message sent from the Messaging Server (M) to the sender user device (A);
- displaying the message in the devices of users (A, B, C) formatted according to the indications of relevance.

2. The method according to claim 1, further comprising, when the Messaging Server (M) receives the signalling (11) with the indication of relevance of the message from a user of the list (B), recording (13) in the Communication Archive (H) the indication of relevance for said user (B)

3. The method according to claim 2, wherein recording (13) in the Communication Archive (H) the indication of relevance further comprising updating in the Communication Archive (H) a counter on number of indications for the message.

4. The method according to claim 3, wherein the message is displayed in a user device of any user (A, B, C) of the group by highlighting the copy of the message proportionally to the number of indications of relevance signalled for the copy of the message.

5. The method according to any of claims 3-4, wherein the message is displayed in a user device of any user (A, B, C) of the group only if the number of indications of relevance signalled for the copy of the message exceeds a predefined number.

6. The method according to any of claims 3-4, wherein the message is displayed in a user device of any user (A, B, C) of the group only if the relevance of the message exceeds a predefined number, wherein the relevance of the message for a user (A, B, C) is defined according to a weighted sum of three parameters: the number of indications signalled for the message, an age of the message counted since the time when the message was sent by the sender user (A) and a value indicating that the message was sent from one of the favourite contacts of said user (A, B, C).

7. The method according to any of claims 2-4, wherein the message is displayed in a user device of any user (A, B, C) of the group only if the indications of relevance for the message correspond to certain users.

8. The method according to claim 2, wherein recording (13) in the Communication Archive (H) the indication of relevance further comprising grouping messages received in a same thread and determining relevance of the thread according to a weighted sum of the indications of relevance for all messages inside the thread.

9. The method according to claim 8, wherein the thread is displayed in the devices of users (A, B, C) according to the determined relevance of the thread.

10. The method according to any of claims 8-9, wherein the thread is determined by using a natural lenguage technique.

11. The method according to any preceding claim, further comprising, when the presence status of a user (C) in the list changes from offline to online, said user (C) requesting the Communication Archive (H) to perform a message ranking, the Communication Archive (H) calculating the message ranking based on indications of relevance recorded in the Communication Archive (H) and the Communication Archive (H) delivering the set of messages missed by the user (C) while being offline according to the message ranking.

12. The method according to any preceding claim, wherein, when the Communication Archive (H) delivers the list of messages missed by the user (C) while being offline, the Communication Archive (H) further delivers the number of indications of relevance of the identified messages in the list and a list of users which report the indications of relevance.

13. A system for determining relevance of messages in group messaging services, comprising:
- a Messaging Server (M) for receiving (1) a message from a sender user device (A) which belongs to a group of messaging service;
- the system further comprising a Communication Archive (H) storing (2) a copy of the message and communicated with the Messaging Server (M) and wherein the Messaging Server (M) comprises:
- means for requesting from a group management server (G) a list of users (A, B, C) which belong to the group of the sender user (A), each user of the list (A, B, C) being associated with a presence status selected from online and offline, and requesting to deliver (7, 9) the copy of the message to each user of the list (B, C) except the sender user (A); the system being **characterized by**:
- means for receiving from at least one of the users of the list (A, B, C) a signalling (11) with an indication of relevance of the message;
- means for delivering to every user (A, B, C) of the group whose presence status is online information to identify the message and the indications of relevance signalled for the message, the information to identify the message comprising an identifier of the group and a first identifier of the message sent from the Messaging Server (M) to the sender user device (A), and the message being formatted according to the indications of relevance to be displayed in the devices of users (A, B, C).

## Patentansprüche

1. Verfahren zum Bestimmen der Relevanz von Nachrichten in Gruppennachrichtendiensten, wobei das Verfahren aufweist:
- Empfangen (1) einer Nachricht von einem Sendebenutzer (A) durch einen Nachrichtenserver (M), der zu einer Gruppe von Nachrichtendiensten gehört;
- Speichern (2) einer Kopie der Nachricht in einem Kommunikationsarchiv (H), welches mit dem Nachrichtenserver (M) kommuniziert;
- Anfragen (4) bei dem Nachrichtenserver (M) von einem Gruppenverwaltungsserver (G) einer Liste von Benutzern (A, B, C), welche zu der Gruppe des Sendebenutzers (A) gehören, wobei jeder Benutzer in der Liste (A, B, C) mit einem Präsenzstatus verknüpft ist, ausgewählt von Online und Offline;
- für jeden Benutzer der Liste (B, C) mit Ausnahme des Sendebenutzers (A) beantragt der Nachrichtenserver (M) die Kopie der Nachricht auszuliefern (7, 9);
das Verfahren ist **dadurch gekennzeichnet,**
**dass** es weiterhin aufweist:
- Empfangen durch den Nachrichtenserver (M) von mindestens einem der Benutzer in der Liste (A, B, C) eine Signalisierung (11) mit einem Hinweis auf die Relevanz der Nachricht;
- Ausliefern an jeden User (A, B, C) der Gruppe dessen Präsenzstatus online ist durch den Nachrichtenserver (M), den Hinweis der Relevanz der für die Nachricht signalisiert wurde und Informationen, um die Nachricht zu identifizieren, wobei die Information, um die Nachricht zu identifizieren, einen Identifizierer der Gruppe und einen ersten Identifizierer der Nachricht, welche von dem Nachrichtenserver (M) an das Sender-Benutzer-Endgerät (A) gesendet wurde aufweisen;
- Anzeigen der Nachricht in den Endgeräten der Benutzer (A, B, C) formatiert entsprechend der Hinweise der Relevanz.

2. Verfahren nach Anspruch 1, des Weiteren aufweisend wenn der Nachrichtenserver (M) die Signalisierung (11) empfängt mit dem Hinweis der Relevanz der Nachricht von einem Benutzer der Liste (B) in dem Kommunikationsarchiv (H) den Hinweis der Relevanz für diesen Benutzer (B) aufzeichnet (13).

3. Verfahren nach Anspruch 2,
wobei das Aufzeichnen (13) in dem Kommunikationsarchiv (H) des Hinweises der Relevanz des Weiteren aufweist Aktualisieren in dem Kommunikationsarchiv (H) einen Zähler der Anzahl der Hinweise für die Nachricht.

4. Verfahren nach Anspruch 3,
wobei die Nachricht in einem Benutzerendgerät von irgendeinem Benutzer (A, B, C) der Gruppe durch Hervorheben der Kopie der Nachricht proportional zu der Anzahl von Hinweisen zur Relevanz, welche für die Kopie der Nachricht signalisiert wurden, dargestellt wird.

5. Verfahren nach einem der Ansprüche 3 bis 4,
wobei die Nachricht in einem Benutzerendgerät von irgendeinem Benutzer (A, B, C) der Gruppe nur dargestellt wird, wenn die Anzahl der Hinweise zur Relevanz, welche für die Kopie der Nachricht signalisiert wurden, eine vorbestimmte Nummer überschreiten.

6. Verfahren nach einem der Ansprüche 3 bis 4,
wobei die Nachricht in einem Benutzerendgerät für irgendeinen Benutzer (A, B, C) der Gruppe nur dargestellt wird, wenn die Relevanz der Nachricht eine vorbestimmte Nummer übersteigt, wobei die Relevanz der Nachricht für einen Benutzer (A, B, C) definiert ist, entsprechend einer gewichteten Summe von drei Parametern: der Anzahl von Hinweisen, welche für die Nachricht signalisiert wurden, des Alters der Nachricht, gezählt seit der Zeit als die Nachricht von dem Benutzer (A) gesendet wurde, und einem Wert, welcher anzeigt, dass die Nachricht von einem der favorisierten Kontakte des Benutzers (A, B, C) gesendet wurde.

7. Verfahren nach einem der Ansprüche 2 bis 4,
wobei die Nachricht nur in einem Benutzerendgerät eines Benutzers (A, B, C) der Gruppe angezeigt wird, wenn der Hinweis der Relevanz für die Nachricht mit einem bestimmten Benutzer korrespondiert.

8. Verfahren nach Anspruch 2,
wobei das Aufzeichnen (13) in dem Kommunikationsarchiv (H) des Hinweises der Relevanz des Weiteren aufweist Gruppieren von Nachrichten, welche in demselben Thread empfangen wurden, und Bestimmen der Relevanz des Threads anhand einer gewichteten Summe der Hinweise der Relevanz für alle Nachrichten innerhalb des Threads.

9. Verfahren nach Anspruch 8,
wobei der Thread auf den Endgeräten der Benutzer (A, B, C) entsprechend der bestimmten Relevanz des Threads dargestellt wird.

10. Verfahren nach einem der Ansprüche 8 bis 9,
wobei der Thread unter Verwendung einer natürlichen Lingualtechnik bestimmt wird.

11. Verfahren nach einem der vorhergehenden Ansprüche, des Weiteren aufweisend wenn der Anwesenheitsstatus eines Benutzers (C) in der Liste von Offline nach Online geändert wird, fordert der Benutzer (C) das Kommunikationsarchiv (H) auf, eine Nachrichtenrangfolge durchzuführen, wobei das Kommunikationsarchiv (H) die Nachrichtenrangfolge basierend auf den Hinweisen der Relevanz, welche in dem Kommunikationsarchiv (H) aufgezeichnet sind, berechnet und das Kommunikationsarchiv (H) liefert den Satz durch den Benutzer (C) verpassten Nachrichten während er offline war entsprechend der Nachrichtenrangfolge aus.

12. Verfahren nach einem der vorhergehenden Ansprüche,
wobei wenn das Kommunikationsarchiv (H) die Liste der Nachrichten ausliefert, die von dem User (C) verpasst wurden, während er offline war, das Kommunikationsarchiv (H) des Weiteren die Anzahl der Hinweise der Relevanz der identifizierten Nachrichten in der Liste und eine Liste von Benutzer, welche den Hinweis der Relevanzberichte ausliefert.

13. System zum Bestimmen der Relevanz von Nachrichten in einem Gruppennachrichtenservice aufweisend:
- einen Nachrichtenserver (M) zum Empfangen (1) einer Nachricht von einem Sendebenutzerendgerät (A), welche zu einer Gruppe von Nachrichtenservices gehört;
- das System weist des Weiteren ein Kommunikationsarchiv (H) zum Speichern (2) einer Kopie der Nachricht und Kommunizieren mit dem Nachrichtenserver (M) auf, wobei der Nachrichtenserver (M) aufweist:
- Mittel zum Anfragen von einem Gruppenverwaltungsserver (G) einer Liste von Benutzern (A, B, C), welche zu der Gruppe des Sendebenutzers (A) gehören, jeder Benutzer der Liste (A, B, C) ist mit einem Anwesenheitsstatus ausgewählt von Online und Offline verbunden und Anfragen des Auslieferns (7, 9) der Kopie der Nachricht an jeden Benutzer der Liste (B, C) abgesehen von dem Sendebenutzer (A);
das System ist **gekennzeichnet durch**,
- Mittel zum Empfangen von mindestens einem Benutzer der Liste (A, B, C), eine Signalisierung (11) mit einem Hinweis der Relevanz der Nachricht;
- Mittel zum Liefern an jeden Benutzer (A, B, C) der Gruppe, dessen Präsenzstatus online ist, Informationen um die Nachricht zu identifizieren und die Hinweise der Relevanz, welche für diese Nachricht signalisiert wurden, die Informationen zum Identifizieren der Nachricht weisen einen Identifizierer der Gruppe und einen ersten Identifizierer der Nachricht, auf welche von dem Nachrichtenserver (M) an das Sende-Benutzer-Endgerät (A) gesendet wurde, und die Nachricht ist formatiert entsprechend der Hinweise der Relevanz, um in den Endgeräten der Nutzer (A, B, C) angezeigt zu werden.

## Revendications

1. Procédé pour déterminer la pertinence de messages dans des services de messagerie de groupe, le procédé comprenant :
- la réception (1) par un serveur de messagerie (M) d'un message en provenance d'un utilisateur envoyeur (A) qui appartient à un groupe de service de messagerie ;
- le stockage (2) d'une copie du message dans une archive de communication (H) qui communique avec le serveur de messagerie (M) ;
- la demande (4) par le serveur de messagerie (M) à un serveur de gestion de groupe (G) d'une liste d'utilisateurs (A, B, C) qui appartiennent au groupe de l'utilisateur envoyeur (A), chaque utilisateur de la liste (A, B, C) se voyant associer un état de présence qui est sélectionné parmi en ligne et hors ligne ;
- pour chaque utilisateur de la liste (B, C) à l'exception de l'utilisateur envoyeur (A), le serveur de messagerie (M) demandant la délivrance (7, 9) de la copie du message ;
le procédé étant **caractérisé en ce qu'**il comprend en outre :
- la réception par le serveur de messagerie (M), en provenance d'au moins l'un des utilisateurs de la liste (A, B, C), d'une signalisation (11) avec une indication de pertinence du message ;
- la délivrance, par le serveur de messagerie (M) à chaque utilisateur (A, B, C) du groupe dont l'état de présence est en ligne, des indications de pertinence qui sont signalées pour le message et d'une information pour identifier le message, l'information pour identifier le message comprenant un identifiant du groupe et un premier identifiant du message qui est envoyé depuis le serveur de messagerie (M) au dispositif d'utilisateur envoyeur (A) ; et
- la présentation, dans les dispositifs d'utilisateurs (A, B, C), du message qui est formaté conformément aux indications de pertinence.

2. Procédé selon la revendication 1, comprenant en outre, lorsque le serveur de messagerie (M) reçoit la signalisation (11) avec l'indication de pertinence du message en provenance d'un utilisateur de la liste (B), l'enregistrement (13) dans l'archive de communication (H) de l'indication de pertinence pour ledit utilisateur (B).

3. Procédé selon la revendication 2, dans lequel l'enregistrement (13) dans l'archive de communication (H) de l'indication de pertinence comprend en outre la mise à jour dans l'archive de communication (H) d'un compteur du nombre d'indications pour le message.

4. Procédé selon la revendication 3, dans lequel le message est présenté dans un dispositif d'utilisateur d'un quelconque utilisateur (A, B, C) du groupe en surlignant la copie du message proportionnellement au nombre d'indications de pertinence qui sont signalées pour la copie du message.

5. Procédé selon l'une quelconque des revendications 3 et 4, dans lequel le message est présenté dans un dispositif d'utilisateur d'un quelconque utilisateur (A, B, C) du groupe seulement si le nombre d'indications de pertinence qui sont signalées pour la copie du message excède un nombre prédéfini.

6. Procédé selon l'une quelconque des revendications 3 et 4, dans lequel le message est présenté dans un dispositif d'utilisateur d'un quelconque utilisateur (A, B, C) du groupe seulement si la pertinence du message excède un nombre prédéfini, dans lequel la pertinence du message pour un utilisateur (A, B, C) est définie conformément à une somme pondérée de trois paramètres : le nombre d'indications qui sont signalées pour le message, un âge du message décompté depuis l'instant auquel le message a été envoyé par l'utilisateur envoyeur (A) et une valeur qui indique que le message a été envoyé depuis l'un des contacts favoris dudit utilisateur (A, B, C).

7. Procédé selon l'une quelconque des revendications 2 à 4, dans lequel le message est présenté dans un dispositif d'utilisateur d'un quelconque utilisateur (A, B, C) du groupe seulement si les indications de pertinence pour le message correspondent à certains utilisateurs.

8. Procédé selon la revendication 2, dans lequel l'enregistrement (13) dans l'archive de communication (H) de l'indication de pertinence comprend en outre le groupage de messages qui sont reçus dans un même microblogue et la détermination de la pertinence du microblogue conformément à une somme pondérée des indications de pertinence pour tous les messages à l'intérieur du microblogue.

9. Procédé selon la revendication 8, dans lequel le microblogue est présenté dans les dispositifs d'utilisateurs (A, B, C) conformément à la pertinence déterminée du microblogue.

10. Procédé selon l'une quelconque des revendications 8 et 9, dans lequel le microblogue est déterminé en utilisant une technique basée sur un langage naturel.

11. Procédé selon l'une quelconque des revendications précédentes, comprenant en outre, lorsque l'état de présence d'un utilisateur (C) dans la liste passe de hors ligne à en ligne, le fait que ledit utilisateur (C) demande à l'archive de communication (H) de réaliser un classement de messages, l'archive de communication (H) calculant le classement de messages sur la base d'indications de pertinence qui sont enregistrées dans l'archive de communication (H) et l'archive de communication (H) délivrant le jeu de messages qui sont manqués par l'utilisateur (C) tandis que celui-ci est hors ligne conformément au classement de messages.

12. Procédé selon l'une quelconque des revendications précédentes, dans lequel, lorsque l'archive de communication (H) délivre la liste de messages qui sont manqués par l'utilisateur (C) tandis que celui-ci est hors ligne, l'archive de communication (H) délivre en outre le nombre d'indications de pertinence des messages identifiés dans la liste et une liste d'utilisateurs qui rapportent les indications de pertinence.

13. Système pour déterminer la pertinence de messages dans des services de messagerie de groupe, comprenant :
- un serveur de messagerie (M) pour recevoir (1) un message en provenance d'un dispositif d'utilisateur envoyeur (A) qui appartient à un groupe de service de messagerie ;
- le système comprenant en outre une archive de communication (H) qui stocke (2) une copie du message et qui communique avec le serveur de messagerie (M), et dans lequel le serveur de messagerie (M) comprend :
- un moyen pour demander à un serveur de gestion de groupe (G) une liste d'utilisateurs (A, B, C) qui appartiennent au groupe de l'utilisateur envoyeur (A), chaque utilisateur de la liste (A, B, C) se voyant associer un état de présence qui est sélectionné parmi en ligne et hors ligne, et pour demander la délivrance (7, 9) de la copie du message à chaque utilisateur de la liste (B, C) à l'exception de l'utilisateur envoyeur (A) ;
le système étant **caractérisé par** :
- un moyen pour recevoir, depuis au moins l'un des utilisateurs de la liste (A, B, C), une signalisation (11) avec une indication de pertinence du message ;
- un moyen pour délivrer, à chaque utilisateur (A, B, C) du groupe dont l'état de présence est en ligne, une information pour identifier le message et les indications de pertinence qui sont signalées pour le message, l'information pour identifier le message comprenant un identifiant du groupe et un premier identifiant du message qui est envoyé depuis le serveur de messagerie (M) au dispositif d'utilisateur envoyeur (A), et le message étant formaté conformément aux indications de pertinence pour qu'il soit présenté dans les dispositifs d'utilisateurs (A, B, C).
